# EUROPEAN PATENT APPLICATION

(11) **EP 3 395 755 A1**
(43) Date of publication of application: **31.10.2018**
(21) Application number: 18151238.5
(22) Date of filing: 11.01.2018
(51) Int. Cl.: B67D 7/14, B67D 7/22, G07F 13/04, B67D 7/30, B67D 7/42

(54) **FLUID DISPENSING METHOD AND APPARATUS**

(30) Priority: 24.04.2017 GB 201706465
(71) Applicant: Brenntag UK Limited, Leeds, West Yorkshire LS16 6QY (GB)
(72) Inventor: COLE, Sean, Leeds, West Yorkshire LS16 6QY (GB)
(74) Representative: Mohun, Stephen John

(57) **Abstract**

A fluid dispensing apparatus 120 is arranged to dispense fluid, such as Diesel Exhaust Fluid, to car drivers on a forecourt of a fuel station (not shown) . The apparatus 120 comprises a housing 130 for distributing the fluid, via a hose 150 and nozzle 140, and components for the distribution of pressurised air via a tyre connector 420.

## Description

The present invention relates to a fluid dispensing method, and to an apparatus for dispensing fluid, and is concerned particularly, although not exclusively, with a method and apparatus for dispensing a consumable solution used in automotive engines.

For several years it has been common practice to use Diesel Exhaust Fluid (DEF) to mitigate against harmful nitrogen oxide emissions from diesel-engine commercial vehicles. More recently the same approach has been taken with cars, and this has exposed a new category of road user to the practice.

DEF typically comprises a commercially available aqueous solution of urea that is supplied from an on-board tank to the exhaust stream by a metering system. The DEF is consumed at a rate according to the use of the vehicle engine, and a full tank may typically last for up to ten thousand miles. Regulations require that the fluid is used whenever the vehicle engine is running, and vehicle systems are commonly configured to prevent ignition when insufficient reserves of DEF are present in the on-board tank.

The vehicle's systems are typically arranged to notify the driver when supplies of DEF are running low, for example via a message or warning indicator. In order to re-charge the on-board tank, the user of the vehicle must then either visit a garage, or else a container of the DEF may be purchased from a supplier.

If a visit to the garage is necessary, such as a visit to the dealer from where the vehicle was purchased, this can be inconvenient and can also lead to delays, particularly as an appointment will usually be necessary. In the alternative, if the user wishes to re-charge the tank manually, this can also be inconvenient, as the user may be unfamiliar with the procedure, notably how to dispense it.

Embodiments of the present invention aim to provide a convenient method and apparatus for recharging the on-board tank of a car with DEF.

The present invention is defined in the attached independent claims, to which reference should now be made. Further, preferred features may be found in the sub-claims appended thereto.

According to one aspect of the present invention, there is provided apparatus for dispensing a fluid, the apparatus comprising:
a tank for containing fluid;
an outlet arranged in use to output fluid;
a pump for pumping fluid from the tank to the outlet;
a control unit arranged in use to control the dispensing of fluid from the outlet; and
an access unit for registering an access status;
wherein the apparatus is arranged in use to dispense fluid from the outlet when the access unit registers an appropriate access status.

Optionally, the apparatus is arranged in use to dispense fluid from the outlet for a predetermined period of time. Additionally, and/or alternatively, the apparatus may be arranged in use to dispense a predetermined volume of fluid from the outlet.

In a preferred arrangement, the access unit comprises a credit unit for registering a payment credit, whereupon an appropriate access status may comprise an appropriate payment credit.

The apparatus preferably comprises an interface for communication with a human user and/or with another device. The interface may comprise one or more of the following, including but not limited to: a key-pad, a touch screen, a scanner, such as an optical scanner, a near field communication (NFC) device, card reader, a coin/token receiver.

The apparatus preferably includes at least a first display arranged in use to display a count related to the control unit. The count may represent a time elapsed and/or a volume dispensed or remaining. In a preferred arrangement, the first display may be arranged in use to indicate a period of time remaining, a volume dispensed or a volume remaining from the predetermined/pre-set time/volume allocated by the control unit.

The apparatus may comprise a conduit, preferably at least one hose for connecting the tank with the outlet. The outlet may comprise a nozzle, which may be a hand-operated nozzle.

The fluid may comprise Diesel Exhaust Fluid (DEF).

The invention also includes a combined apparatus for dispensing fluid, the apparatus being in accordance with any statement herein, and which includes further apparatus for dispensing water and/or air.

According to another aspect of the present invention, there is provided a method of dispensing fluid, the method comprising: storing fluid in a tank for dispensing from an outlet, registering an access status and pumping fluid from the tank to the outlet under the control of a control unit when an appropriate access status is registered.

Optionally, the method comprising pumping fluid from the outlet for a predetermined period of time. Additionally, and/or alternatively, the method may comprise pumping a predetermined volume of fluid from the outlet.

In a preferred arrangement, the registering of an access status comprises registering a payment credit, whereupon an appropriate access status may comprise an appropriate payment credit.

The method preferably comprises communicating with a human user and/or with another device via an interface, which may comprise one or more of the following, including but not limited to: a key-pad, a touch screen, a scanner, such as an optical scanner, a near field communication (NFC) device, card reader, a coin/token receiver.

Preferably the method comprises displaying a count related to the control unit. In a preferred arrangement, the method may comprise indicating a period of time remaining, volume dispensed and/or volume remaining from a predetermined/pre-set time allocated by the control unit.

The method may comprise a method of dispensing Diesel Exhaust Fluid (DEF).

In a further aspect, the invention provides a computer programme product on a computer-readable medium, comprising instructions that, when executed by a computer, cause the computer to perform a method of dispensing fluid, the method comprising: storing fluid in a tank for dispensing from an outlet, registering an access status and pumping fluid from the tank to the outlet under the control of a control unit when an appropriate access status is registered.

The invention also comprises a programme for causing a device to perform a method of dispensing fluid, the method comprising: storing fluid in a tank for dispensing from an outlet, registering an access status and pumping fluid from the tank to the outlet under the control of a control unit when an appropriate access status is registered.

The invention may include any combination of the features or limitations referred to herein, except such a combination of features as are mutually exclusive, or mutually inconsistent.

A preferred embodiment of the present invention will now be described, by way of example only, with reference to the accompanying diagrammatic drawings, in which:
Figure 1 shows schematically an apparatus for dispensing a fluid, in accordance with an embodiment of the present invention;
Figure 2 shows schematically a part of the apparatus of Figure 1;
Figure 3 is an exterior perspective view of an operational unit according to an embodiment of the invention;
Figure 4 shows an internal view of an operational unit according to an embodiment of the invention;
Figure 5 shows a side view of an operational unit according to an embodiment of the invention; and
Figure 6 is a schematic flow diagram illustrating a part of a method of dispensing a fluid, in accordance with an embodiment of the present invention.

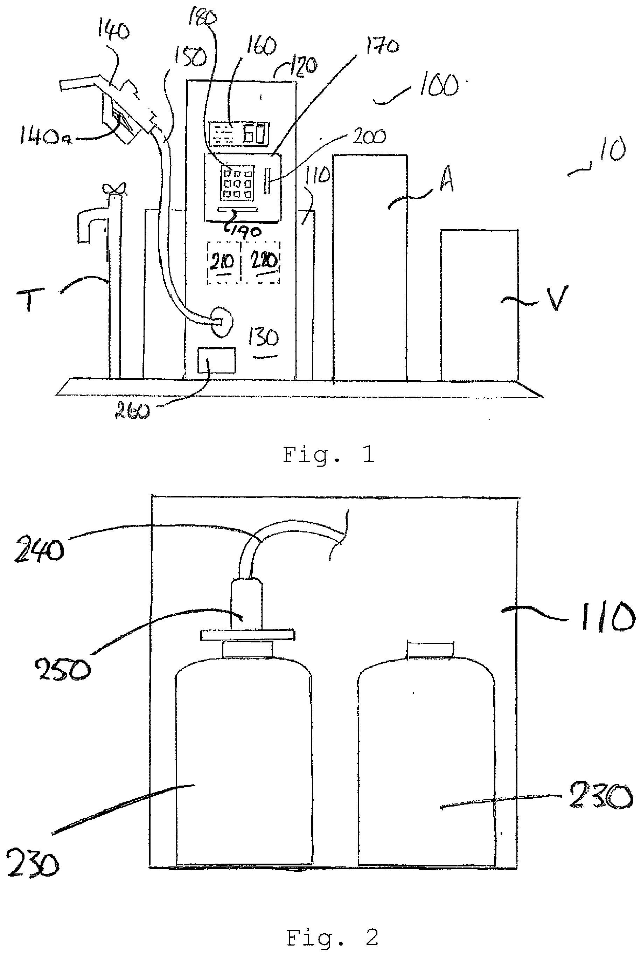

Turning to Figures 1 and 2, this shows generally at 100 a fluid dispensing apparatus in accordance with an embodiment of the present invention. In this example, the apparatus 100 is arranged to dispense Diesel Exhaust Fluid to car drivers on a forecourt of a fuel station (not shown), and is part of a combined services unit 10, in which there is provided a tap T for supplying water, a pressurized air terminal A for inflating tyres and a vacuum cleaner V.

The apparatus 100 comprises a storage housing 110, containing two supply containers (shown in Figure 2) and an operational unit 120.

The operational unit 120 comprises a housing 130 and a dispensing nozzle 140 operably connected to a dispensing hose 150. On a front wall of the housing 130 is a display unit 160 and a user interface 170 with a key-pad 180, a card reader 190 and a coin/token receiver 200. Within the housing is located a pump 210. Operation of the apparatus is governed by a control unit 220 within the housing 120, which includes an electronic controller, and an electronic memory, and in some embodiments may comprise a timer unit.

Figure 2 shows the storage housing 110 to the rear of the operational housing 120. Within the storage housing 110 are located two tanks 230 of Diesel Exhaust Fluid. One of the tanks 230 is connected to a hose 240 via a connector 250. The hose 240 leads to the operational housing 120 and a connection (not shown) therein to the pump 210. A level monitor such as a float valve (not shown) within the tank provides a visual indication on the display 160 when the level of fluid in the tank falls below a predetermined level, which may be regarded as empty. The level monitor may prevent the apparatus from dispensing fluid when the level of fluid in the tanks 230 falls below a predetermined threshold, such as 8 litres. This prevents air from entering the suction system. When this occurs an operative manually disconnects the connector 250 from the empty tank and connects it to a full one.

The storage housing 110 may comprise a roller shutter (not shown) for easy access to the tanks 230, whilst enabling the housing 110 to be secure, strong and weather resistant. In some embodiments, the storage housing 110 may be used to display promotional materials and or act as a point of sale display for other products.

During operation, a user registers credit to use the apparatus 100 in a credit register of the control unit 220. This can conveniently be done by making a payment by one of several methods, including, but not limited to: insertion of a coin or token in the coin/token receiver 200, insertion of a payment card into the card reader 190, optionally together with a user inputting a personal identification number via the key-pad 180, touching a contactless card to the display 160, whereupon the card is read using near field communication apparatus (NFC, or scanning an image indicating pre-payment.

Once a credit is registered the apparatus 100 may be used to dispense DEF. A predetermined time period is indicated on the display 160 indicating the maximum length of time for which the apparatus will dispense fluid based upon the purchased credit. An example would be 60 Seconds, which is shown on the display as it counts down once dispensing has begun. Alternatively, and/or additionally, the credit may be representative a predetermined volume of fluid. The control unit 220 may be used to monitor the amount of time elapsed and/or volume of fluid dispensed. In some embodiments, the apparatus may comprise a European Measuring Instruments Directive approved meter, to monitor the dispensing of the fluid. It will be appreciated that other equipment and/or components may be suitable for monitoring the dispensing of the fluid based upon the time and/or volume dispensed.

A user (not shown) takes the nozzle 140 from its dock (not shown) and squeezes a trigger 140a to activate the pump 210 and hence to begin dispensing fluid. At this stage the user will have inserted the end of the nozzle into a filling neck leading to an on-board storage tank of his car (not shown).

The apparatus will continue to dispense fluid until the period timed by the timer unit of the control unit 220 expires, whereupon the pump 210 will be deactivated. In the case of dispensing by volume, when the predetermined volume of fluid registered by the control unit 220 has been dispensed, the pump 210 will be deactivated.

Volume dispensed may be determined, for example using known flow rates - in which case, the timer can be used to determine the volume. Alternatively, or additionally, a predetermined volume can be dispensed from a vessel (not shown) of a known volume.

The user may stop and start the dispensing under the control of the nozzle. Whenever the nozzle is not activated the timer/volume counter pauses and then resumes when the nozzle is reactivated until the time runs out, the volume has been dispensed, or the nozzle is placed back in its dock.

The apparatus also includes a telemetry and diagnostics unit 260 for monitoring usage and performance, and for communicating these to a remote site as required.

The apparatus is conveniently located on a fuel forecourt but spaced from flammable fuels, so that no special switchgear may be required. Furthermore, the dispensing of fluid according to a guaranteed period of time, rather than a specified volume, allows for the use of metering that need not be certified by some regulatory authorities, further reducing the cost of the apparatus.

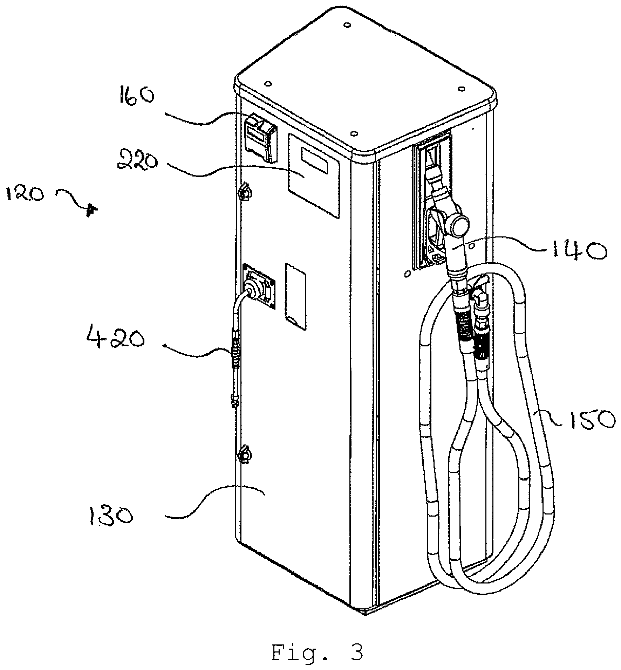

Figure 3 shows an exterior perspective view of an operational unit 120 according to an embodiment of the invention. The operational unit 120 comprises a housing 130 for distributing a fluid, via a hose 150 and nozzle 140, and components for the distribution of pressurised air via a tyre connector 420.

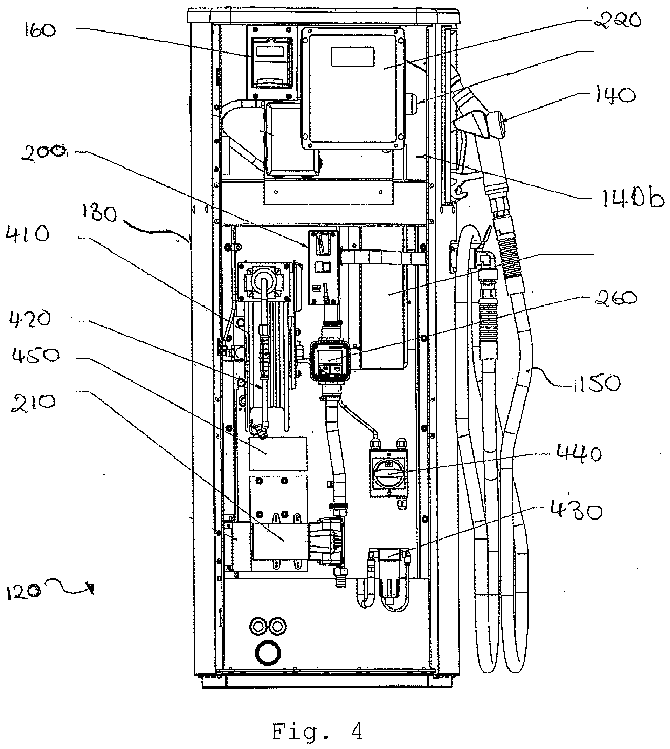

Turning to Figure 4, there is shown an interior view of an operational unit 120 according to an embodiment of the invention. In this embodiment, the operational unit 120 is a combined services unit capable of dispensing fluid, along with other liquids or gases, such as air and/or water.

The operational unit 120 is arranged in use to be connected to a storage housing (not shown) containing the fluid to be dispensed.

The operational unit 120 comprises a nozzle 140 for dispensing the fluid. The nozzle is connected to a hose 150. A user provides a credit, for example in the form of a coin/token (as described above), via a coin/token receiver 200. Once credit has been provided, a predetermined time and/or volume is allocated to the control unit 220 which is then displayed on the display 160. Upon removing the nozzle 140 from the holder, a nozzle detector switch 140b is disengaged, allowing the user to dispense the fluid using the nozzle 140. The user then pumps fluid for the allocated time, after which the pump ceases. If the user replaces the nozzle 140 before the allocated time has elapsed the nozzle detector switch 140b is activated so as to end distribution.

As mentioned above, the operational unit 120 of Figures 3 and 4 combines fluid distribution and the distribution of other liquids/gases, in this case, pressurised air for inflating vehicle tyres. It will be appreciated that other types of facilities may be provided within the same housing 130, including but not limited to water, and vacuum facilities.

For the distribution of air, and other gases/liquids, the operational unit 120 comprise a hose reel 410 for storing a length of hose for distribution of air. There is also provided a tyre connector 420 for connection to a vehicle tyre to enable inflation. The operational unit 120 may also comprise an air filter 430 for filtering particulates from the air used to inflate the tyres. It will be appreciated that the distribution of air and other gases/liquids may be free of charge and not require connection to the control unit 220 and credit components of the operational unit 120.

In some embodiments, such as the one of Figure 4, the operational unit 120 is provided with an isolator switch 440 to enable the unit 120 to be disabled. The operational unit 120 may also be provided with cabinet heater 450 to ensure any fluids are distributed at the optimum temperature, and to prevent the freezing of fluids in lower temperatures which may damage the components and pipework of the unit 120.

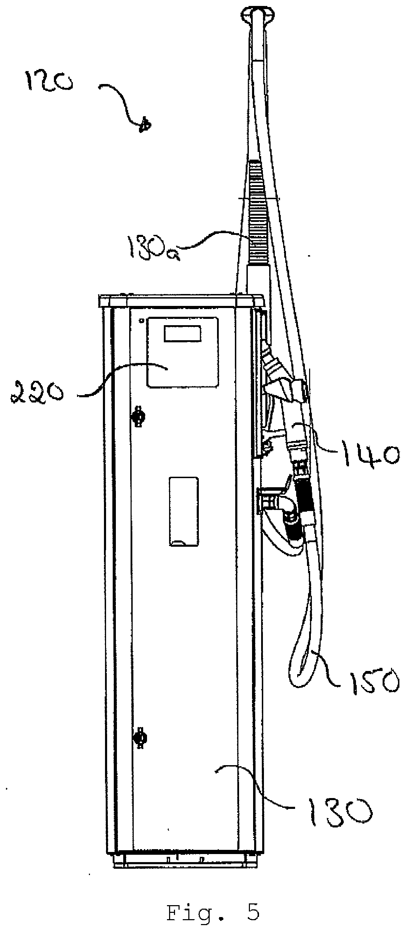

Turning to Figure 5, there is shown an exemplary embodiment of the operational unit 120. The operational unit 120 comprises a housing 130 having a mast 130a. The mast 130a is arranged to receive a portion of the hose 150 connected to the nozzle (not shown). This mast 130a enables the hose 150 to be stored off the ground, reducing the risk of tripping and also enabling the hose 150 to extend over a vehicle (not shown) for ease of use when the vehicle's fluid inlet is on the opposing side of the vehicle to the operational unit 120.

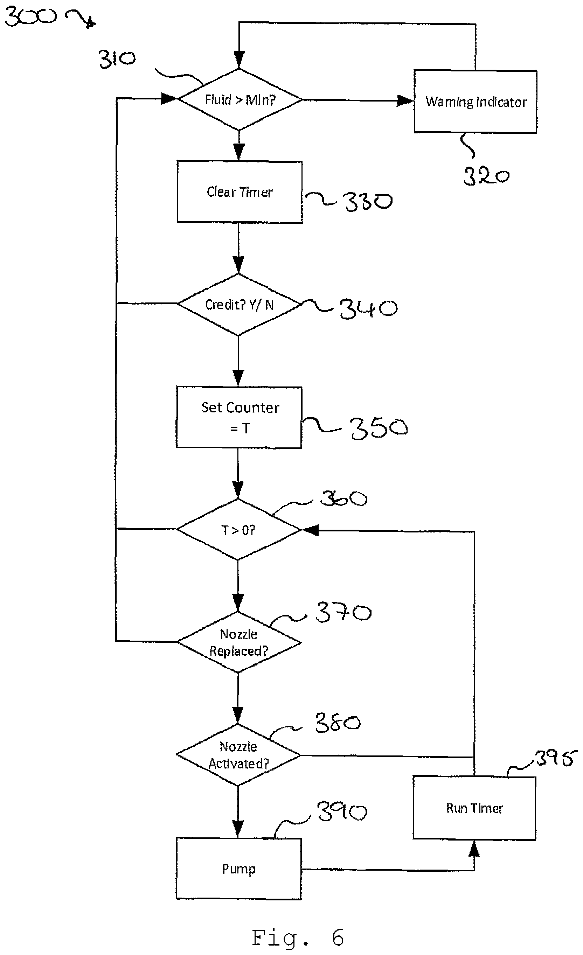

Turning to Figure 6, there is shown a method 300 for dispensing a fluid, such as DEF for a vehicle. At step 310, it is determined whether a fluid reserve is below a predetermined minimum, and if not, the method progresses to step 320. At step 320 a warning indicator is switched off if the level of additive is above the predetermined minimum.

If the additive is above the predetermined minimum, the method progresses to step 330. At step 330 a counter is cleared. The method then progresses to step 340, where it is determined whether a user has provided credit to the apparatus. Credit may be provided, as mentioned above, by a number of different means, for example, cash, credit/debit card, NFC payment or an online transaction. If credit has been provided, the method progresses to step 350. If not, the method returns to step 310.

At step 350 the counter is set to a predetermined value, which may be a fixed period of time, a predetermined volume (e.g. based on a known flow rate or a multiple of a vessel of known volume), or may be made to depend on the amount of credit provided at step 340. In some embodiments of the invention, the amount of time and/or volume provided is linked directly to the amount of credit provided. Alternatively, pre-set durations/ volumes may be used for example, 20 seconds, 40 seconds, 60 seconds or 120 seconds, 0.5 litres, 1.0 litres, 1.5 litres, or 2.0 litres, or other durations as determined by the owner/operator.

Once the counter has been set at step 350, the method progresses to step 360 where a check is carried out to determine whether the counter is greater than zero, which is representative of zero seconds and/or zero litres. If so, the method progresses to step 370. If not, the method returns to step 310. At step 370, a check is undertaken to determine whether the nozzle has been replaced in the dock. If so, the method returns to step 310, if not, the method progresses to step 380.

At step 380, it is determined whether the nozzle is activated. If so, then the method progresses to step 390, where the pump is activated. If not, the method returns to step 360 where it is determined whether the counter still has some duration left. At step 390, the pump is activated and the fluid is dispensed, the method then progresses to step 395 where the counter is decreased, or decremented. The method then returns to step 360 where a check is made to ensure that the counter is greater than zero. Steps 360, 370, 380, 390, and 395 repeat until the counter is zero or until the nozzle is replaced in its dock.

Whilst endeavouring in the foregoing specification to draw attention to those features of the invention believed to be of particular importance, it should be understood that the applicant claims protection in respect of any patentable feature or combination of features referred to herein, and/or shown in the drawings, whether or not particular emphasis has been placed thereon.

## Claims

1. An apparatus for dispensing a fluid, the apparatus comprising:
a tank for containing fluid;
an outlet arranged in use to output fluid;
a pump for pumping fluid from the tank to the outlet;
a control unit arranged in use to control the dispensing of fluid from the outlet; and
an access unit for registering an access status;
wherein the apparatus is arranged in use to dispense fluid from the outlet when the access unit registers an appropriate access status.

2. The apparatus of Claim 1, wherein the apparatus is arranged in use to dispense fluid from the outlet for a predetermined period of time and/or dispense a predetermined volume of fluid.

3. The apparatus of any of Claims 1 or 2, wherein the access unit comprises a credit unit for registering a payment credit, and whereupon an appropriate access status may comprise an appropriate payment credit.

4. The apparatus of any previous claim, further comprising an interface for communication with a human user and/or with another device, wherein the interface comprises one or more of the following, including but not limited to: a key-pad, a touch screen, a scanner, such as an optical scanner, a near field communication device, card reader, and/or a coin/token receiver.

5. The apparatus of any previous claim further comprising at least a first display arranged in use to display a timer count and/or volume related to the control unit.

6. The apparatus of Claim 6, wherein the first display is arranged in use to indicate a period of time remaining, the volume dispensed, and/or the volume remaining from the predetermined/pre-set time and/or volume allocated by the control unit.

7. The apparatus of any previous claim, wherein the apparatus comprises at least one hose for connecting the tank with the outlet.

8. The apparatus of any previous claim, wherein the fluid comprises Diesel Exhaust Fluid.

9. The apparatus of any previous claim further comprising apparatus for dispensing water and/or air.

10. A method of dispensing fluid, the method comprising: storing fluid in a tank for dispensing from an outlet, registering an access status and pumping fluid from the tank to the outlet under the control of a control unit when an appropriate access status is registered.

11. The method of Claim 10, further comprising pumping fluid from the outlet for a predetermined period of time and/or pumping a predetermined volume of fluid.

12. The method of any of Claims 10 or 11, wherein the registering of an access status comprises registering a payment credit, and whereupon an appropriate access status may comprise an appropriate payment credit.

13. The method of any of Claims 10 - 12 for dispensing Diesel Exhaust Fluid.

14. A computer programme product on a computer-readable medium, comprising instructions that, when executed by a computer, cause the computer to perform a method of dispensing fluid, the method comprising: storing fluid in a tank for dispensing from an outlet, registering an access status and pumping fluid from the tank to the outlet under the control of a control unit when an appropriate access status is registered.

15. A programme for causing a device to perform a method of dispensing fluid, the method comprising: storing fluid in a tank for dispensing from an outlet, registering an access status and pumping fluid from the tank to the outlet under the control of a control unit when an appropriate access status is registered.
